Europäisches Patentamt

European Patent Office

Office européen des brevets

(19)

(11) Publication number: **0 237 253**
A2

(12) **EUROPEAN PATENT APPLICATION**

(21) Application number: **87301844.4**

(22) Date of filing: **03.03.87**

(51) Int. Cl.³: **C 01 B 33/26**
**C 04 B 35/18**

(30) Priority: **10.03.86 US 837992**

(43) Date of publication of application:
**16.09.87 Bulletin 87/38**

(84) Designated Contracting States:
**BE DE FR GB IT NL SE**

(71) Applicant: **THE DOW CHEMICAL COMPANY**
**2030 Dow Center Abbott Road P.O. Box 1967**
**Midland, MI 48640(US)**

(72) Inventor: **Stevens, Rex Raymond**
**4311 Andre**
**Midland Michigan 48640(US)**

(72) Inventor: **Johnson, Herbert Allen**
**1401 Helen**
**Midland Michigan 48640(US)**

(74) Representative: **Burford, Anthony Frederick et al,**
**W.H. Beck, Greener & Co. 7 Stone Buildings Lincoln's Inn**
**London WC2A 3SZ(GB)**

(54) **Cordierite precursor preparation.**

(57) A fine cordierite precursor material is produced by substantially simultaneously contacting in an aqueous medium at the pH of 8.5 or greater, agueous solutions containing salts of magnesium and aluminum, an aqueous suspension of colloidal silica and optionally a free hydroxyl ion source to form a precipiate. The precipitate may be separated and washed before conversion to a synthetic cordierite product.

EP 0 237 253 A2

# CORDIERITE PRECURSOR PREPARATION

This invention concerns a process for producing a precursor material useful for preparing cordierite.

The industrial importance of cordierite (2 MgO:2 $Al_2O_3$:5 $SiO_2$) lies in the fact that bodies made of cordierite are characterizable as having a very low thermal expansion over a wide range of temperatures and a high thermal shock resistance when subjected to abrupt temperature changes. Typically, cordierite bodies may have thermal expansion as low as 0.5 x $10^{-6}$/°C in the range of 0°C to 200°C. Industrial uses for cordierite, therefore, include refractory heat plates, honeycomb structures for cleaning exhaust gas from automobiles, and physiochemical refractory materials.

Generally, cordierite is manufactured by mixing clay, such as kaolin, talc, magnesia materials such as magnesite, and calcining the resultant mixture at temperatures of 1250°C to 1350°C. It is also known to produce cordierite by firing cordierite precursor materials prepared by various coprecipitation methods.

0237253

It is desirable to produce cordierite from a cordierite precursor material prepared by a coprecipitation process rather than a mechanical mixture of clay, talc and magnesia because a higher purity cordierite can be produced from such cordierite precursors. High purity cordierite is desirable since impurities such a calcium oxide and alkalis present in cordierite tend to increase the thermal expansion coefficient of the cordierite and to adversely affect the ability of the cordierite to resist thermal shocks.

A batch coprecipitation process of preparing a cordierite precursor is described in the article by K. Yasui et al., "Formation of Cordierite From $Mg(OH)_2$, $Al(OH)_3$, and Silica Gel", (Seto Yogyo Cent., Seto, Japan), Aichi-ken Seto Yogyo Gijutsu Senta Kenkyu Hokokusho, 1976, 5, 15-18 (Japan). This process is carried out using two separate components to prepare a gel type cordierite precursor. First, a coprecipitate of magnesium and aluminum is formed by adding ammonia into a solution containing a magnesium salt and an aluminum salt. Then silica gel is added to the coprecipitate of magnesium and aluminum to form the gel type cordierite precursor. In forming the coprecipitate, the precipitation is begun at a pH of 5-6 and completed at a pH of 10. This process is unsatisfactory because coprecipitation carried out over the pH range of 5 to 10 allows formation of agglomerates of $Mg(OH)_2$ and $Al(OH)_3$.

Another batch coprecipitation method of preparing a cordierite precursor is disclosed in the article by Kh. A. Cherches et al., "Synthesis of Cordierite from Charges prepared by the method of coprecipitation", Steklo, Sitally i Silikaty 1977, (6), 168-71 (Russia), from Ref. Zh., Khim. 1977, Abstr. No. 21M15. This method is carried out in a two-stage process. In the first stage, two solutions are prepared, one which contains a magnesium salt and aluminum salt and another which contains sodium silicate and sodium hydroxide. In the second stage, the solutions are mixed together to form a precipitate useful as a cordierite precursor. The disadvantage of this method is that the precipitate must be ground to a powder in order to achieve a particle size useful for preparations of ceramic bodies. The particle size of the cordierite precursor obtained by this method is about 240 micrometers.

Yet another coprecipitation method for preparing a cordierite precursor is proposed by Sano et al. in U.S. 4,367,292. The method of U.S. 4,637,292 is a three-stage precipitation method which involves preparing water containing a magnesium salt, an aluminum salt and a silicon source calculated to correspond to a cordierite percentage composition of Mg, Al and Si, mixing the water with an organic solvent and then adding an ammonia alkaline solution to the mixture to form a precipitate. The alkaline solution is used to raise the pH of the first solution. The precipitate is separated from the solution and dried to form a powder from composition for cordierite. Although a homogeneous super-fine active powder having a particle size diameter of not more than about 1 micrometer is produced by this method, the method is unsatisfactory because an organic silicon compound and an organic solvent are used in the process. The organic materials are difficult to handle and can be relatively costly.

31,245-F                    -3-

It is desired to provide a novel and relatively simple coprecipitation process utilizing a complete aqueous system for preparing a cordierite precursor of fine particle size without the drawbacks of the methods of the prior art. It is further desired to provide a process of preparing a cordierite precursor wherein the agglomeration of particles of the precursor is minimized. Furthermore, it is desired to provide a cordierite precursor which is readily converted into desired cordierite by firing.

The present invention is directed to a process for preparing a cordierite precursor material which comprises substantially simultaneously contacting together in an aqueous medium maintained at a pH of 8.5 or greater the following starting materials:

a. an aqueous solution of a water-soluble magnesium salt,

b. an aqueous solution of a water-soluble aluminum salt,

c. an aqueous suspension of a silicon source, and

d. optionally a free hydroxyl ion source;

in amounts sufficient to substantially immediately form a precipitate calculated to correspond to a cordierite percentage composition as Mg, Al and Si.

Figure 1 is a photomicrograph magnified 300 times, showing cordierite precursor powder prepared by the process of the present invention.

Figure 2 is a photomicrograph magnified 3000 times, showing cordierite precursor power prepared by the process of the present invention.

Figure 3 is a photomicrograph magnified 300 times, showing cordierite precursor powder prepared by Cherches et al.

Figure 4 is a photomicrograph magnified 3000 times, showing cordierite precursor powder prepared by Cherches et al.

According to the present invention, a cordierite precursor, in the form of a finely divided homogeneous active powder is prepared. The cordierite precursor, upon firing or calcination, will produce a cordierite containing the theoretical proportions of Mg/Al/Si components. The cordierite precursor material is to be used to form cordierite bodies with low thermal expansion, high mechanical strength, and good thermal shock resistance properties.

Theoretically, cordierite is composed, by weight, of 13.7 percent of MgO, 34.9 percent of $Al_2O_3$, and 51.4 percent of $SiO_2$. Generally, the MgO content of cordierite may vary within the range of 10 percent to 16 percent by weight, the $Al_2O_3$ content may vary within the range of 30 percent to 40 percent by weight, and the $SiO_2$ content may vary within the range of 43 percent to 56 percent by weight.

Generally, the process of forming the cordierite precursor involves substantially simultaneously contacting together in an aqueous medium the following raw materials:

0237253

1. a water-soluble magnesium salt,
2. a water-soluble aluminum salt,
3. a silicon source, and
4. optionally a hydroxyl ion source.

The raw materials are mixed in desired proportions to achieve upon firing an approximately stoichiometric cordierite composition of Mg/Al/Si, i.e. the 2:2:5 composition within the ranges above of Mg/Al/Si.

One advantage of the process of the present invention over the prior art is that an entirely aqueous system is used without organic solvents or compounds or other compounds which are difficult to handle and which may form impurities in the final cordierite product.

The water-soluble magnesium salt used in the present invention may include, for example, magnesium halides such as magnesium chloride and magnesium bromide, magnesium oxalate, magnesium nitrate and magnesium sulfate. Among the magnesium salts used, magnesium chloride is preferably used because it is easier to handle, relatively inexpensive and readily available.

The water-soluble aluminum salts used in the present invention may include, for example, aluminum halides such as aluminum chloride, aluminum bromide, aluminum fluoride, aluminum nitrate, and aluminum sulfate. Among the aluminum salts used, aluminum chloride is preferred because it is easier to handle, relatively inexpensive and readily available.

The silicon source used in the present invention may be any inorganic, alkali-free silicon source such as colloidal silica. It has been found that alkali metal ions present in cordierite are detrimental to cordierite because the alkali impurities tend to form low-melting compositions which lead to premature densification and fusion of particles during calcination of the cordierite. In addition, the impurities undesirably raise the dielectric constant of the cordierite. Consequently, the silicon source used in the present invention is preferably colloidal silica because it is free of alkali ions, particularly sodium ions.

The hydroxyl ion source of the present invention is used as needed to induce precipitation of the components of cordierite. Preferably, the hydroxyl ion source used may be any source which will not leave a residue or impurity in the precipitate. For example, ammonium hydroxide or ammonia gas may be used as the hydroxyl ion source. Ammonium hydroxide is preferably used because it is alkali-free and will not contaminate the product with alkali ions as aforementioned.

The process of the present invention may be carried out under batch or continuous conditions using equipment commonly used for such processes. In carrying out the process of the present invention, the raw materials are added substantially simultaneously as aqueous solutions, or water-like slurry or suspension in the case of colloidal silica, to an aqueous medium maintained at a pH of about 8.5 or greater sufficiently to form a precipitate. More preferably a pH of about 9 has been used usefully.

31,245-F                     -7-

Preferably, the raw materials are separately mixed in an aqueous medium such as water and then the separate aqueous mixtures are substantially simultaneously introduced into a reaction vessel containing an aqueous medium, for example, an aqueous ammonium chloride solution where a precipitate is formed. The precipitate is then separated from the aqueous medium and dried to form a powder composition for cordierite production.

It is important in the present process to maintain the pH of the aqueous medium above the isoelectric point (IEP). The "isoelectric point" herein means the pH at which the net charge on a particle suspended in solution is zero. Above the IEP the particles have a negative surface charge and below the IEP the particles have a positive charge. The pH ranges stated above provide this condition. By carrying out the process of the present invention above the IEP a superior cordierite precursor material can be produced for preparing ceramic articles.

The powder composition which is obtained by the process of this invention is a homogeneous, uniform, super-fine active powder having a particle diameter of about 0.5 to 25 micrometers. The powder may be calcined to lower the surface area by partial sintering at a temperature of from 800 to 1000°C and preferably from 800 to 900°C. The surface area of the powder may be reduced, for example, to a surface area lying in the range of 10 to 50 $m^2/g$ and more preferably to a surface area lying in the range of 25 to 30 $m^2/g$. The powder may be used directly for fabrication of ceramic bodies. The ceramic bodies may be fired or calcined by conventional methods to convert it into cordierite.

31,245-F

The development of the cordierite phase typically occurs after the final densification beginning at temperatures of about 1225°C and completed at about 1400°C.

The invention will be further explained in detail in the following example which is not intended as limitatious thereof.

Example

A 4 liter (1), baffled, mild steel tank equipped with an overhead agitator was half filled with an aqueous solution of 10 weight percent $NH_4Cl$. As the aqueous $NH_4Cl$ solution was being vigorously agitated, separate tap water solutions of 10 weight percent $MgCl_2$, 20 weight percent $AlCl_3$ and 10 weight percent $NH_4OH$ along with a 10 weight percent water dispersion of colloidal silica suspension (the silica raw material having been obtained commercially from the PQ CORPORATION) were individually and simultaneously pumped into the tank via single dip tubes for each of the reagents or raw materials supplied above. The dip tubes were physically set and arranged to discharge near the impeller section of the agitator.

Pumping of the $MgCl_2$, $AlCl_3$ and $SiO_2$ feeds was adjusted to provide the relative rates of each required to give a respective Mg/Al/Si mole ratio containment of 2:4:5 in the precipitation tank. Sufficient $NH_4OH$ was pumped into the tank to constantly maintain the pH of the aqueous reaction mass medium at a value between 9.0 and 9.5. This caused, in literally quantitative and gravimetric deposition, $Mg(OH)_2$ and $Al(OH)_3$ to precipitate on and cling tightly to the colloidal $SiO_2$

particles dispersed through the reaction mass. The total flow rate of the solutions being fed to the reactor tank was fixed at approximately 4 1/hr.

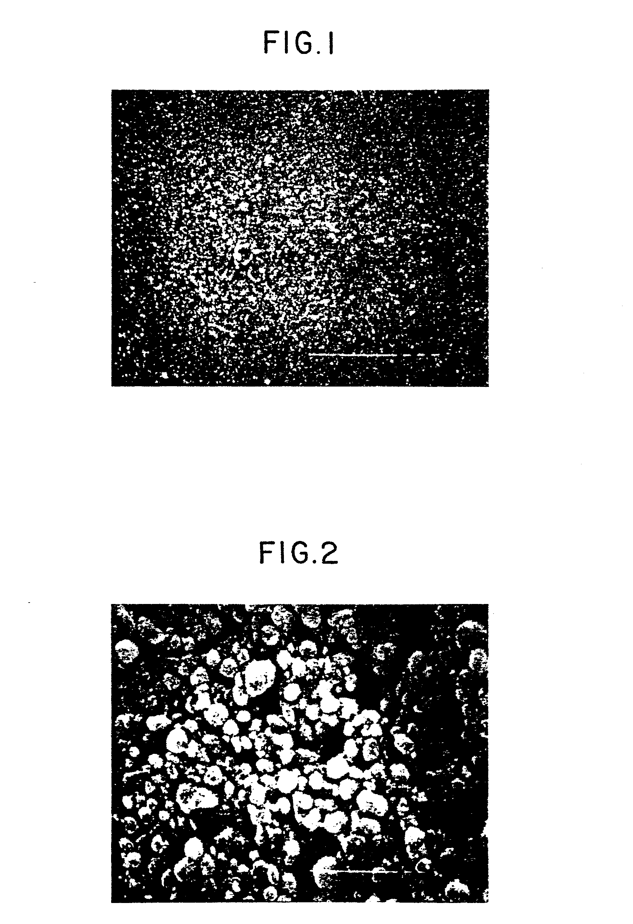

After 3 hours of continuous precipitation, the precipitator slurry was collected from the tank overflow for 1 hour. The slurry was allowed to settle; after which it was filtered and washed with water and then dried at 150°C in air (See Figures 1 and 2).

The resultant dried precursor precipitate material was pressed into 1/2 inch (1.3 cm) diameter pellets of a length about equal to the diameter. These pellets were then fired at 1300°C to yield ceramic, pelletized product having an X-ray powder diffraction pattern corresponding to that standard for cordierite.

Example A (Comparison)

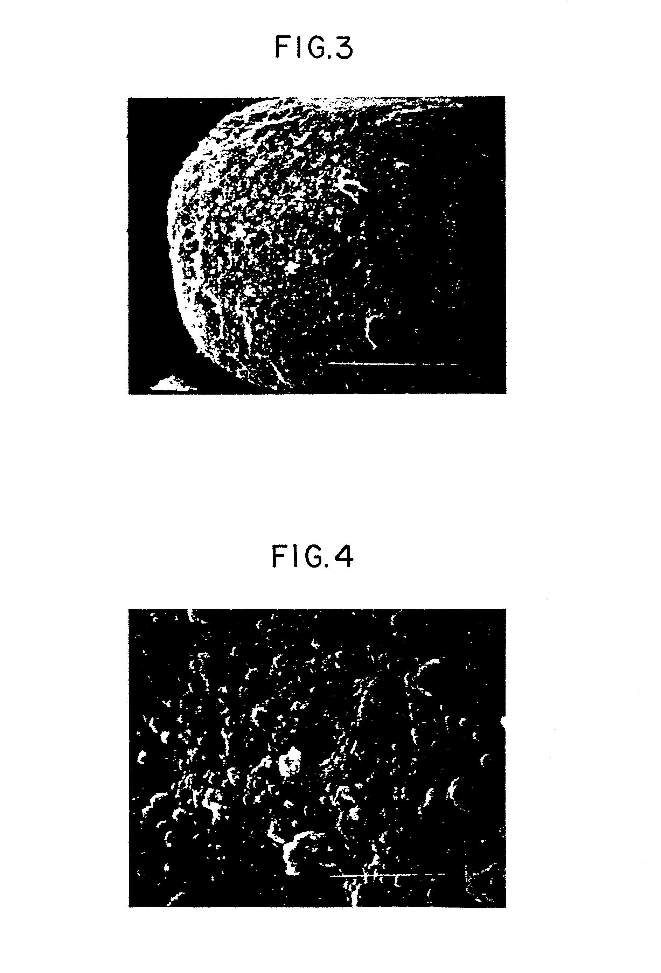

Comparison of the X-ray diffraction patterns shown by Figures 3 and 4 by Cherches, et al. shows the development of the cordierite phase during firing. At 1300°C, for example, the product of the method of Cherches, et al. gives the pattern of cordierite only. Cherches, et al. co-add all ingredients before raising the pH to precipitate the product. Cherches, et al. note that their product required grinding and screening in order to pass through a 60 mesh screen (240 micrometers).

The present invention co-adds the ingredients at a constant pH which is maintained above the isoelectric point of the mixture. Not only the desirable mixing is attained and the concomitant phase

31,245-F                    -10-

0237253

development at low temperature, but also a dramatically less agglomerated product.

The attached photomicrographs (Figures 1-4) demonstrate the superiority of the present process for the production of ceramic precursor powders. The particle size of the powder made by the present process averages 3 micrometers, whereas that made by the process of Cherches, et al. averages about 300 micrometers. The latter is processable only after extensive grinding. The final particle size of that powder will be limited by the grinding operation. The particle size obtained by the process of the present invention is determined by the residence time in the reactor and the pH at which the precipitation is carried out.

0237253

CLAIMS:-

1.   A process for preparing a cordierite precursor material which comprises substantially simultaneously contacting together in an aqueous medium maintained at a pH of 8.5 or greater the following starting materials: an aqueous solution of a water-soluble magnesium salt; an aqueous solution of a water-soluble aluminum salt; an aqueous solution suspension of a silicon source; and optionally a free hydroxyl ion source, in amounts sufficient to substantially immediately form a precipitate calculated to correspond to a cordierite percentage composition as Mg, Al and Si.

2.   A process as claimed in Claim 1, including further the steps of separating the precipitate from the aqueous medium and drying the precipitate.

3.   A process as claimed in Claim 2, including further the step of calcining the precipitate to reduce the precipitate's surface area.

4.   A process as claimed in Claim 3, wherein the surface area is reduced to 10 to 50 $m^2/g$.

5.   A process as claimed in any one of the preceding claims, wherein the process is continuous.

6.   A process as claimed in any one of the preceding claims, wherein the pH is 9 or greater.

7.   A process as claimed in any one of the preceding claims, wherein the aqueous solution of a water-soluble magnesium salt is an aqueous solution of magnesium chloride.

8.    A process as claimed in any one of the preceding claims, wherein the aqueous solution of a water-soluble aluminum salt is an aqueous solution of aluminum chloride.

9.    A process as claimed in any one of the preceding claims, wherein the aqueous suspension of a silicon source is an aqueous suspension of colloidal silica.

10.   A process as claimed in any one of the preceding claims, wherein the aqueous medium contains ammonium chloride.

11.   A process of preparing cordierite, which comprises firing a cordierite precursor material obtained by a process as claimed in any one of the preceding claims.

FIG.I

FIG.2

## FIG.3

## FIG.4